# EUROPÄISCHE PATENTANMELDUNG

(11) **EP 0 538 972 A2**
(43) Veröffentlichungstag der Anmeldung: **28.04.1993**
(21) Anmeldenummer: 92250300.8
(22) Anmeldetag: 14.10.1992
(51) Int. Cl.: F23J 15/00

(54) **Müllverbrennungsanlage**

(30) Priorität: 25.10.1991 DE 4135694
(71) Anmelder: AMPHAG AG, CH-7304 Maienfeld (CH)
(72) Erfinder: van Hamburg, Hendrik, 6390 Usingen (DE)
(74) Vertreter: Böning, Manfred, Dr.-Ing.

(57) **Zusammenfassung**

Bei einer Müllverbrennungsanlage ist zur Steigerung des Reinheitsgrades der in die Atmosphäre austretenden Verbrennungsgase ein Gefriertrockner (6) in dem Reinigungstrakt integriert. In dem Gefriertrockner (6) werden von einem Naßwäscher (4) herangeführte, an Flüssigkeitspartikel gebundene Schadstoffteile ausgeschieden.

## Beschreibung

Die Erfindung betrifft eine Müllverbrennungsanlage, bei der die Verbrennungsgase nach Passieren eines Rauchgaskühlers mit Hilfe eines Elektrofilters und mindestens eines Naßwäschers gereinigt werden.

Bekannt sind Müllverbrennungsanlagen der vorstehenden Art, bei denen die im Elektrofilter und Naßwäscher gereinigten Gase durch ein Gebläse über einen Schornstein ins Freie gedrückt werden. Der mit den bekannten Anlagen erzielbare Reinheitsgrad der Verbrennungsgase genügt zwar den gesetzlich vorgeschriebenen Anforderungen, seine Steigerung ist gleichwohl wünschenswert. Der entsprechenden Zielsetzung sucht die Erfindung zu genügen. Ihr liegt mit anderen Worten das Problem, d.h. die zu lösende Aufgabe zugrunde, bei einer Müllverbrennungsanlage den Schadstoffanteil der Abgase zu reduzieren. Die Lösung besteht darin, daß dem Naßwäscher ein Gefriertrockner zum Abscheiden von an Flüssigkeitspartikeln gebundenen Schadstoffteilen nachgeschaltet ist.

Bei der erfindungsgemäßen Müllverbrennungsanlage wird dank des Einsatzes eines Gefriertrockners der Schadstoffanteil der Verbrennungsgase in einem Maße reduziert, das den Einsatz eines Schornsteins überflüssig macht. Im Gefriertrockner fällt der größte Teil der Schadstoffpartikel, die in den vorgeschalteten Reinigungsstufen des Verbrennungsgases noch nicht ausgeschieden wurden, nahezu vollständig als Schnee aus und kann folglich auf einfache Weise entfernt werden. Die den Gefriertrockner passierenden und in ihm zusätzlich gereinigten Gase lassen sich zudem nutzen, um das im Naßwäscher verwendete Waschmedium zu kühlen.

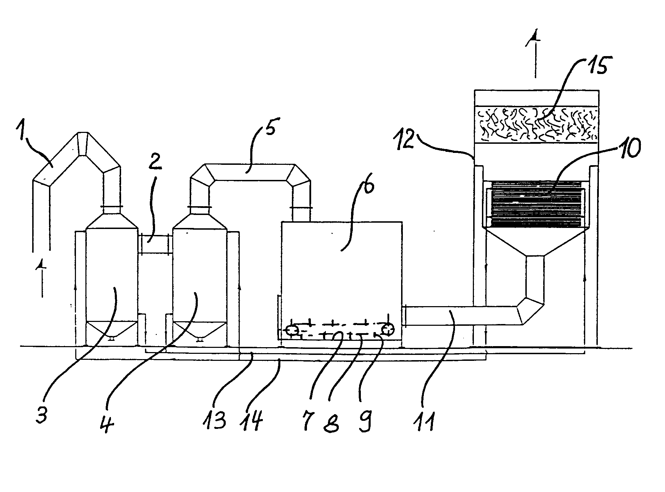

Die Erfindung wird im folgenden anhand eines in der beigefügten einzigen Figur dargestellten Ausführungsbeispieles näher erläutert, wobei auf die Darstellung des Verbrennungstraktes und der Elektrofilter der Anlage verzichtet werden konnte, da diese zum Stand der Technik gehören.

Die in mindestens einem Elektrofilter grob vorgereinigten Verbrennungsgase gelangen über ein Zuleitungsrohr 1 in eine Batterie aus zwei über ein Verbindungsrohr 2 hintereinander geschalteten Naßwäschern 3 und 4. Der Naßwäscher 4 steht über ein weiteres Verbindungsrohr 5 mit einem Gefriertrockner 6 in Verbindung, in dem mit Restschadstoffen belastete, aus dem Naßwäscher 4 kommende Flüssigkeitspartikel gefroren werden und als Schnee auf den Boden 7 des Gefriertrockners 6 fallen, von dem sie mit Hilfe eines Kratzerförderers 8 entfernt werden können, dessen Kratzer 9 besenartig ausgebildet sind. Die niedrige Temperatur des aus dem Gefriertrockner 6 austretenden Gases kann genutzt werden, um in einem Wärmeaustauscher 10 eines über ein Verbindungsrohr 11 mit dem Gefriertrockner 6 verbundenen Kühlturmes 12 das Waschmedium für die Naßwäscher 3 und 4 zu kühlen. Der Wärmeaustauscher 10 steht zu diesem Zweck über Ableitungen 13 und Zuleitungen 14 der Naßwäscher 3 und 4 mit diesen in Verbindung. Der Auslaß des Kühlturmes 12 ist im dargestellten Fall noch mit einem Aktivkohlefilter 15 ausgestattet.

## Patentansprüche

1. Müllverbrennungsanlage, bei der die Verbrennungsgase nach Passieren eines Rauchgaskühlers mit Hilfe eines Elektrofilters und mindestens eines Naßwäschers (3,4) gereinigt werden, dadurch gekennzeichnet, daß dem Naßwäscher (3,4) ein Gefriertrockner (6) zum Abscheiden von an Flüssigkeitspartikeln gebundenen Schadstoffteilen nachgeschaltet ist.

2. Müllverbrennungsanlage nach Anspruch 1, dadurch gekennzeichnet, daß der Gefriertrockner (6) mit Mitteln (8,9) zum Austragen des sich an seinem Boden (7) ansammelnden "Reststaub-Schnees" versehen ist.

3. Müllverbrennungsanlage nach Anspruch 1 oder 2, dadurch gekennzeichnet, daß dem Gefriertrockner (6) ein Kühlturm (12) nachgeschaltet ist, der als Wärmeaustauscher zum Kühlen des im Naßwäscher (3,4) verwendeten Waschmediums ausgebildet ist.

4. Müllverbrennungsanlage nach Anspruch 3, dadurch gekennzeichnet, daß der Auslaß des Kühlturms (12) mit einem Aktivkohlefilter (15) ausgestattet ist.
